# EUROPEAN PATENT SPECIFICATION

(11) **EP 2 690 842 B1**
(45) Date of publication and mention of the grant of the patent: **24.10.2018**
(21) Application number: 13175458.2
(22) Date of filing: 08.07.2013
(51) Int. Cl.: H04L 29/08, H04L 29/06, H04L 12/24

(54) **Device management apparatus, device management system, and computer-readable storage medium**
Vorrichtungsverwaltungsvorrichtung, Vorrichtungsverwaltungssystem und computerlesbares Speichermedium
Appareil et système de gestion de dispositif et support de stockage lisible par ordinateur

(30) Priority: 25.07.2012 JP 2012165255; 04.01.2013 JP 2013000202
(43) Date of publication of application: 29.01.2014
(73) Proprietor: Ricoh Company, Ltd., Tokyo 143-8555 (JP)
(72) Inventor: Yamashita, Akihiro, Tokyo 143-8555 (JP)
(74) Representative: Schwabe - Sandmair - Marx

(56) References cited:
- WO-A2-02/082215
- US-A1- 2007 282 995

## Description

### FIELD OF THE INVENTION

The present invention relates to a device management apparatus, a device management system, and a computer-readable storage medium.

### BACKGROUND OF THE INVENTION

Apparatus that manages permissions to operate a device and permissions to access data stored in a folder is conventionally known. For example, Japanese Patent No. 4765295 discloses an apparatus that manages an analyzing device by restricting permissions to operate the device. Japanese Patent Application Laid-open No. 2005-301756 discloses an access control system that restricts roles and objects on a user-by-user basis.

Companies and the like are required to control detailed permissions to manage devices and the like on an office-by-office and/or department-by-department basis. However, when such detailed permissions are set, a problem of decline in operating efficiency arises because it is difficult for each user to find out what permission is granted to the user.

Therefore, there is a need to provide a device management apparatus and a device management system capable of managing detailed permissions to operate a device while allowing each user to find out what permission is granted to the user easily.

WO 02/088215 A2 describes a user interface for controlling a computer network. The user interface comprises a device menu, a device selection identifier, function menus, a function selection identifier, and a results screen. The device menu identifies at least some of the devices that comprise the computer network. The device selection identifier provides for selecting one of the devices. The function menus correspond to the devices and identify at least some functions that can be performed in connection with the devices. The function selection identifier corresponds to the function menus that allow an entity to select one of the functions. The user may select one of the devices, and may select one of the functions corresponding to the device that is selected. The results screen displays a result corresponding to a selected function. The user interface can be used in connection with wireless devices or existing network management systems. A user interface is for controlling a computer network. The user interface comprises a device menu, a device selection identifier, function menus, a function selection identifier, and a results screen. The device menu identifies at least some of the devices that comprise the computer network. The device selection identifier provides for selecting one of the devices. The function menus correspond to the devices and identify at least some functions that can be performed in connection with the devices. The function selection identifier corresponds to the function menus that allow an entity to select one of the functions. The user may select one of the devices, and may select one of the functions corresponding to the device that is selected. The results screen displays a result corresponding to a selected function. The user interface can be used in connection with wireless devices or existing network management systems.

US-2007/282995 A1 relates to a management system, control method therefor, and computer program. A plurality of device groups are layered and displayed on a display unit based on management information for grouping a plurality of image processing devices and managing them as a device group having a layer attribute. Setting of function restriction information on a function restricted in use in executing a job is accepted for the device group selected from the device groups. The function restriction information is set for all image processing devices in the set device group. At this time, the set function restriction information is set for a group of image processing devices on a lower layer of the selected device group.

### SUMMARY OF THE INVENTION

The invention is defined by the subject-matter of the independent claims. The dependent claims are directed to advantageous embodiments.

### ADVANTAGES OF THE INVENTION

Advantageously, the problems in the conventional technology are at least partially solved.

Advantageously, it is provided a device management apparatus that includes a storage unit configured to store device information in which a target device for management is associated with a group and function information in which a piece of identification information for a user is associated with a function of the device to which operation permission is applied for the user and with the group; an acquisition unit configured to acquire a screen request for acquiring a screen related to the device from the user; a specifying unit configured to specify the function to which the operation permission is applied for the user and the device having the function and belonging to the group by referring to the device information and the function information, in response to the screen request; and a screen generating unit configured to generate screen information related to the function and the device specified by the specifying unit.

The above and other features, advantages and technical and industrial significance of this invention will be better understood by reading the following detailed description of presently preferred embodiments of the invention, when considered in connection with the accompanying drawings.

### BRIEF DESCRIPTION OF THE DRAWINGS

FIG. 1 is a block diagram illustrating a configuration of a device management system according to an embodiment;
FIG. 2 is a block diagram illustrating a functional configuration of a device management apparatus;
FIG. 3 is a diagram schematically illustrating a data structure of a device table;
FIG. 4 is a diagram schematically illustrating a data structure of a function table;
FIG. 5 is a diagram schematically illustrating a data structure of a group table;
FIG. 6 illustrates a hierarchical structure of groups illustrated in FIG. 5;
FIG. 7 schematically illustrates a data structure of a user table;
FIG. 8 illustrates a management screen;
FIG. 9 illustrates another management screen;
FIG. 10 is a flowchart for a device management process; and
FIG. 11 is a hardware configuration diagram of the device management apparatus.

### DETAILED DESCRIPTION OF THE PREFERRED EMBODIMENTS

An exemplary embodiment is described in detail below with reference to the accompanying drawings.

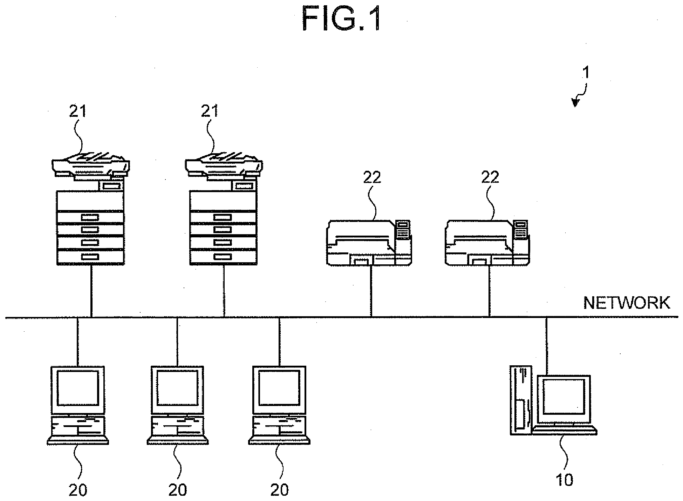

FIG. 1 is a block diagram illustrating a configuration of a device management system 1 according to an embodiment. The device management system 1 includes a device management apparatus 10, client PCs 20, a plurality of multifunction peripherals (MFPs) 21, and a plurality of laser printers (LPs) 22.

The device management apparatus 10 manages the devices included in the device management system 1. More specifically, the device management apparatus 10 manages the plurality of MFPs 21 and the plurality of LPs 22. Hereinafter, the MFPs 21 and the LPs 22 of the device management system 1 are referred to as target devices for management, or simply referred to as target devices.

The client PCs 20 are terminals used by users. A user can use the client PC 20 to make input operations for causing the target device (the MFP 21, the LP 22) to perform a certain function. Examples of the function to be performed by user operation include generating a report about the device, registration of a driver with the device, and changing settings of the device.

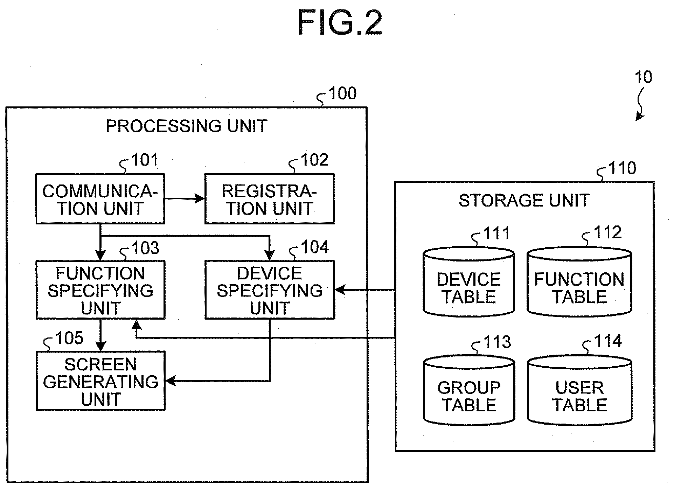

FIG. 2 is a block diagram illustrating a functional configuration of the device management apparatus 10. The device management apparatus 10 includes a processing unit 100 and a storage unit 110. The storage unit 110 stores a device table 111, a function table 112, a group table 113, and a user table 114.

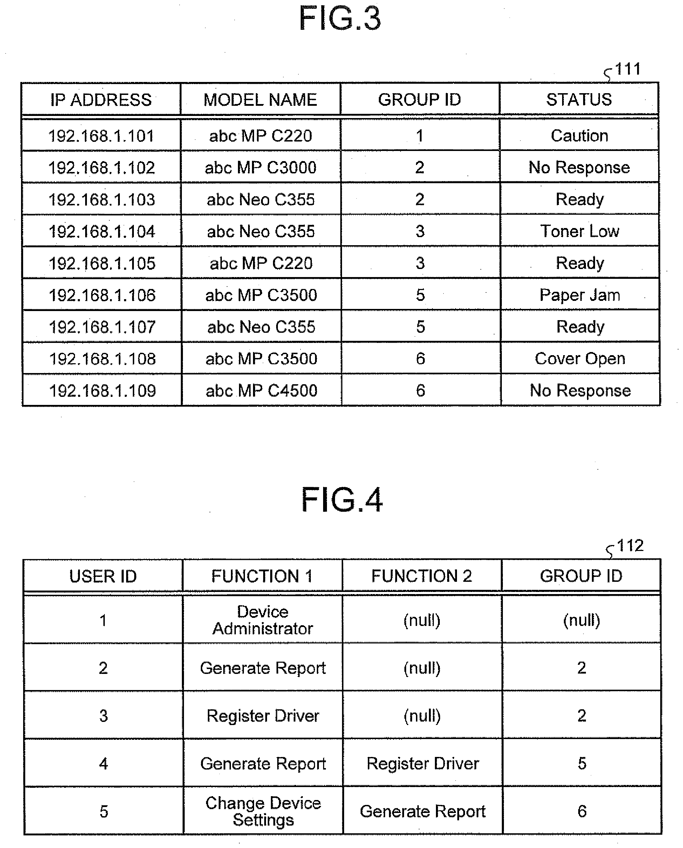

FIG. 3 is a diagram schematically illustrating a data structure of the device table 111. The device table 111 stores information (device information) about each of the management target devices. More specifically, stored in the device table 111 are an IP address, a model name, a group ID, and a status associated with one another for each of the devices. The IP address is information for identifying the device. The model name is information indicating a model name, version, and the like of the device. The status is an operating condition of the device. The group ID is information for identifying a group.

The group denotes a group, to which the device belongs. It is assumed that groups are set in advance by a device administrator or the like. For instance, groups corresponding to offices of a company may be set. More specifically, the groups may be set in such a manner that devices installed in a first office belong to a first group, and devices installed in a second office belong to a second group.

FIG. 4 schematically illustrates a data structure of the function table 112. The function table 112 stores information (function information) indicating a function, to which operation permission is applied for a user, for each of users. More specifically, the function table 112 stores a user ID (identification information) for identification of the user, the function to which the operation permission is applied for the user, and the group ID associated with one another for each of users. Examples of the function include not only generating a report, registration of the driver with the device, and changing settings of the device described above but also a device administrator. The device administrator denotes all the functions. A user associated with the device administrator is grated with operation permission to perform all the functions.

In the function table 112, not only the function but also the group ID are associated with the user ID. The group ID indicates a group, to which a device that can be managed by the user identified by the associated user ID.

As described above, the function, for which operation permission is granted to a user, is set to a user ID in units of group in the function table 112. For instance, a second group, of which group ID is "2", is associated with User2, of which user ID is "2". This indicates that all the devices belonging to the second group are management target devices of User2.

Meanwhile, in the function table 112, a group ID is not associated with the "device administrator" function. This indicates that all of target devices in the device management system 1 are management target devices of a user associated with the "device administrator" function.

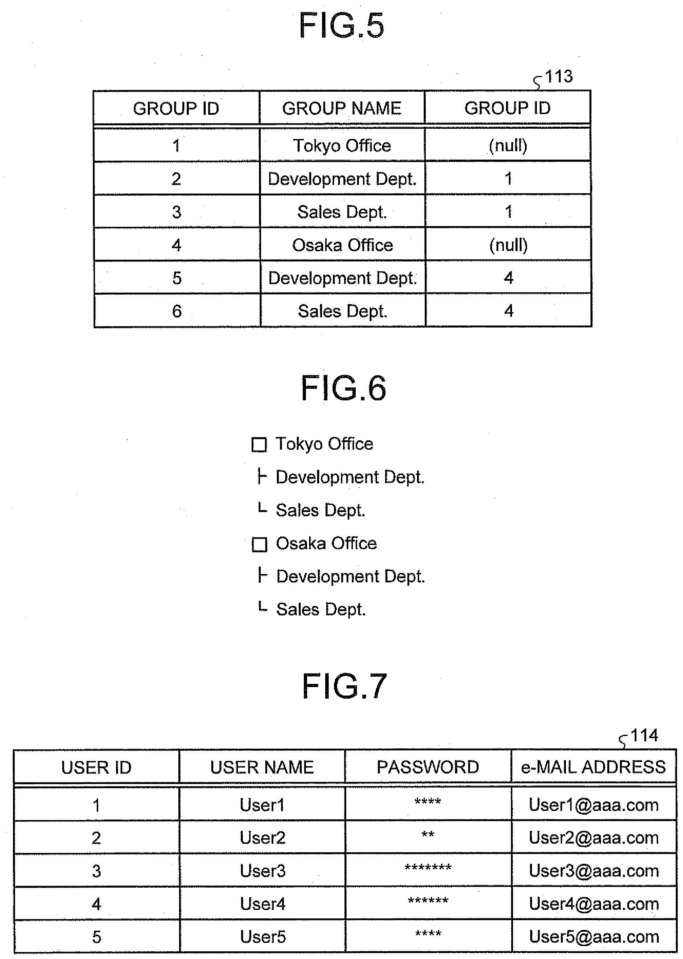

FIG. 5 schematically illustrates a data structure of the group table 113. The plurality of groups, to which devices belong, make up a hierarchical structure. The group table 113 is information that defines this hierarchical structure. More specifically, the group table 113 stores a group ID, a group name, and a group ID of a parent group associated with one another for each of the groups. A parent group of a target group is a group ranked at a higher level of the target group.

FIG. 6 is a diagram illustrating a hierarchical structure of the groups illustrated in FIG. 5. The "Tokyo Office" group identified by the group ID "1" in the group table 113 illustrated in FIG. 5 is a top-level group that has no parent group as illustrated in FIG. 6.

In the group table 113, both of the "Development Dept." group identified by the group ID "2" and the "Sales Dept." group identified by the group ID "3" are associated with the group ID "1" of their parent group. Put another way, as illustrated in FIG. 6, both of "Development Dept." and "Sales Dept." are groups contained in "Tokyo Office" or, in other words, subordinate groups of "Tokyo Office".

FIG. 7 schematically illustrates a data structure of the user table 114. The user table 114 stores information about each of users. More specifically, the user table 114 stores a user ID, a user name, a password, and an e-mail address associated with one another for each of users. The user table 114 is a table to be consulted during user authentication.

Referring back to FIG. 2, the processing unit 100 includes a communication unit 101, a registration unit 102, a function specifying unit 103, a device specifying unit 104, and a screen generating unit 105.

The communication unit 101 carries out communications with the client PCs 20, the MFPs 21, and the LPs 22. For instance, the communication unit 101 receives various instructions input by a user to the client PC 20 from the client PC 20. Examples of the instruction include an instruction to make entry of information about the user and an instruction to display a management screen (screen acquisition request) that displays a device and the like that can be managed by a certain user. Thus, the communication unit 101 corresponds to an acquisition unit that acquires an instruction from a user via the client PC 20. As another example configuration, the device management apparatus 10 may include a user interface and acquire various instructions via the user interface.

The registration unit 102 makes entry of the user to the function table 112 and the user table 114 according to the user registration instruction received by the communication unit 101. The user registration instruction received by the communication unit 101 contains a group designation indication (designation request) that designates a group. The registration unit 102 stores the group designated by the group designation indication and the registration-target user associated with each other in the function table 112. The user registration instruction containing the group designation indication is input to the client PC 20 or the like by an administrator or the like, for example.

Therefore, the administrator or the like can configure settings in units of group rather than by selecting the management target devices of the user one device by one device. Put another way, the administrator or the like can store information related to the user with simple operation.

When the communication unit 101 receives an instruction to display a management screen, the function specifying unit 103 consults the function table 112 to specify a function, for which operation permission is granted to a target user indicated in the display instruction.

More specifically, when the communication unit 101 receives the instruction to display the management screen, the device specifying unit 104 first consults the function table 112 to specify a group, with which the target user indicated in the display instruction is associated. The device specifying unit 104 then consults the device table 111 and the group table 113 to specify devices belonging to the group specified for the target user and devices belonging to subordinate groups of the specified group. The function specifying unit 103 and the device specifying unit 104 correspond to a specifying unit.

The screen generating unit 105 generates a management screen that includes the function specified by the function specifying unit 103 and the devices specified by the device specifying unit 104 and includes an operation accepting area for accepting an instruction to perform the specified function.

The management screen generated by the screen generating unit 105 is transmitted by the communication unit 101 to the client PC 20 in use by the target user. Thus, the communication unit 101 corresponds to an output unit that outputs the management screen to the client PC 20 that includes a display device. As another example configuration, the device management apparatus 10 may include a display device so that the management screen is to the display device and displayed thereby.

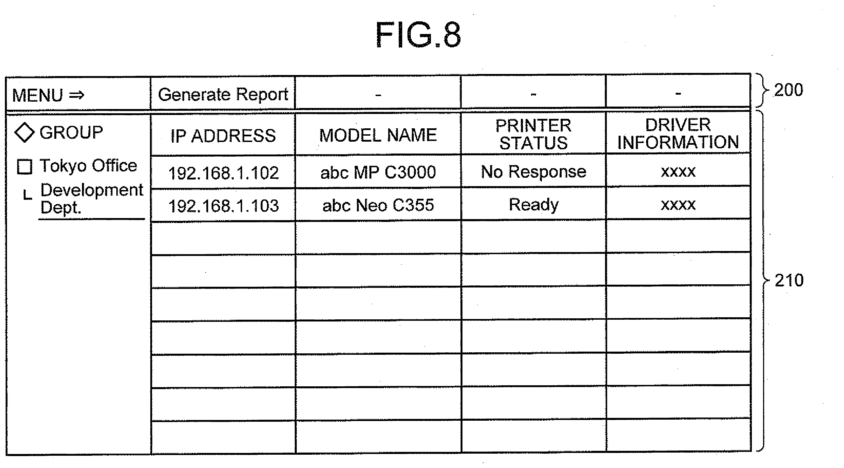

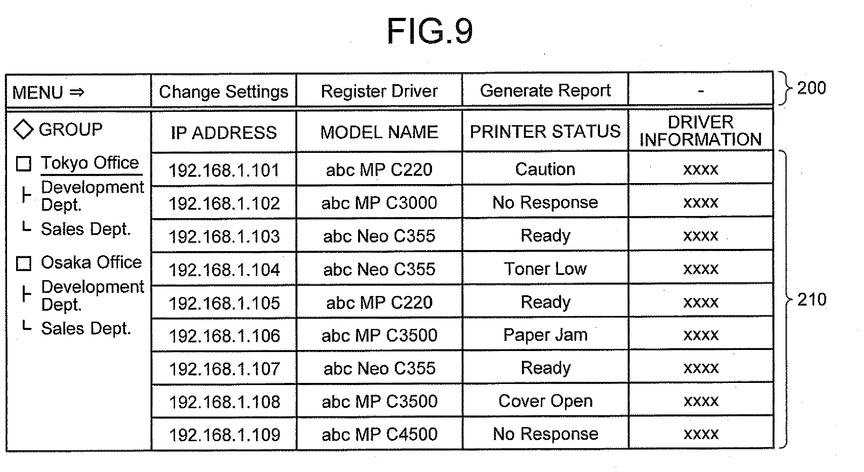

FIGS. 8 and 9 are diagrams each illustrating a management screen. Illustrated in FIG. 8 is a management screen for User2 identified by the user ID "2" stored in the function table 112 illustrated in FIG. 4. In the management screen illustrated in FIG. 8, "Generate Report" is displayed as a function, for which operation permission is granted to User2. The management screen illustrated in FIG. 8 also displays information about devices specified for User2. The management screen illustrated in FIG. 8 further displays "Development Dept.", which is a name of the group of the management target device of User2.

A user can cause a selected function to be performed by a selected device by selecting the "Generate Report" function and further selecting information, such as an IP address, indicating the device, by operating user interface. The management screen includes a function display region 200 and a device display region 210 as the operation accepting area for accepting selecting operations from a user.

Illustrated in FIG. 9 is a management screen for User1 identified by the user ID "1" stored in the function table 112 illustrated in FIG. 4. The management screen illustrated in FIG. 9 also displays all of the functions as functions, to which operation permission is applied for User1, and information about all of the devices as devices specified for User1. The management screen illustrated in FIG. 9 further displays names of all of the groups as names of groups of the management target devices of User1 with a hierarchical structure. The management target screen displays all of the functions of all of the devices in a case where the target user is the device administrator in this way.

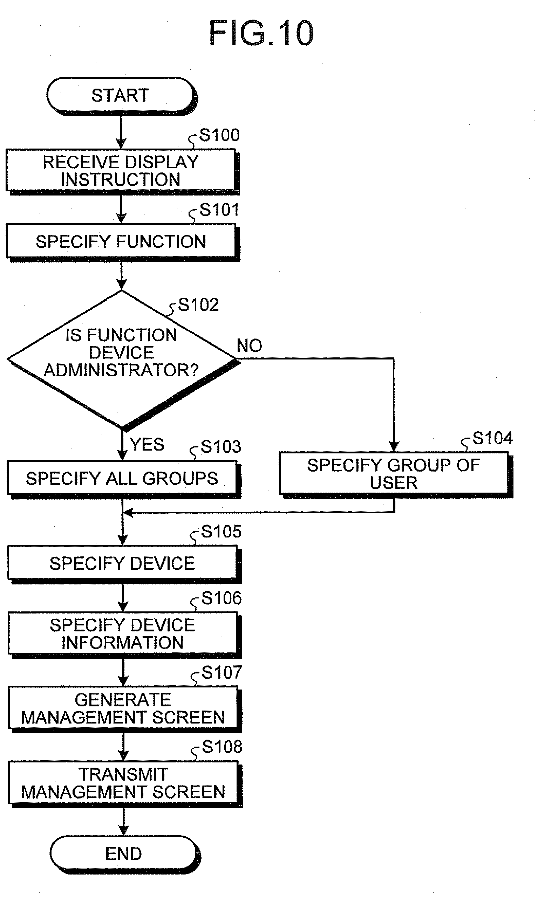

FIG. 10 is a flowchart for a device management process performed by the device management apparatus 10. The device management process starts when a login request is input to the client PC 20 by a user and the user is successfully authenticated. The user table 114 is to be referred to during user authentication.

When the user is successfully authenticated and an instruction to display a management screen is transmitted from the client PC 20, the communication unit 101 receives this display instruction (Step S100). Subsequently, the function specifying unit 103 consults the function table 112 to specify a function, to which operation permission is applied for the target user (Step S101).

Subsequently, the device specifying unit 104 refers to the function table 112 to specify a group, with which the target user indicated in the display instruction is associated. More specifically, when the function associated with the target user in the function table 112 is the device administrator (Yes in Step S102), the device specifying unit 104 specifies all of the groups (Step S103). On the other hand, when the target user is associated with a function other than the device administrator in the function table 112 (No in Step S102), the device specifying unit 104 specifies a group, with which the target user is associated in the function table 112 (Step S104).

Subsequently, the device specifying unit 104 refers to the device table 111 and the group table 113 to specify devices belonging to the specified group and devices belonging to subordinate groups of the specified group (Step S105), and specifies information related to the specified devices (Step S106). The screen generating unit 105 then generates a management screen that includes the specified the function and the specified devices and includes the operation accepting area for accepting an instruction to perform the specified function (Step S107). Subsequently, the communication unit 101 transmits the management screen to the client PC 20 in use by the target user (Step S108). Then, the device management process ends.

In the device management system 1 according to the embodiment, devices are organized into groups as described above. The device management system 1 allows restricting device(s) to be operated by a user in units of group and setting permissions to perform functions on a function-by-function basis. Detailed permissions to operate the devices can be managed in this way. Moreover, the device management system 1 displays, for each of the users, the management screen that includes a device and a function that can be operated by the user. Accordingly, each user can find out what permission is granted to the user easily.

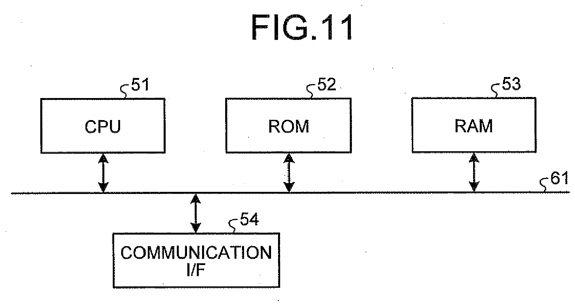

FIG. 11 is an explanatory diagram illustrating an example of hardware configuration of the device management apparatus according to the embodiment. The device management apparatus according to the embodiment has a hardware configuration implemented in a typical computer and includes a control device such as a central processing unit (CPU) 51, a storage device/medium such as a read only memory (ROM) 52 and a random access memory (RAM) 53, a communication interface (I/F) 54 for carrying out communication through connection with a network, an external storage device/medium such as a hard disk drive and/or a compact disc (CD) drive, a display device, an input device such as a keyboard and/or a mouse, and a bus 61 via which these elements are connected to one another.

Program instructions to be executed by the device management apparatus according to the embodiment may be provided as a computer-readable storage medium, such as a CD-ROM, a flexible disk, or a digital versatile disk, as a file in an installable format or an executable format.

The program instructions to be executed by the device management apparatus according to the embodiment may be configured to be stored in a computer connected to a network such as the Internet and provided by downloading over the network. The program instructions to be executed by the device management apparatus according to the embodiment may be configured to be provided or distributed over a network such as the Internet. The program instructions of the embodiment may be configured to be provided as being stored in the ROM 52 or the like in advance.

The program instructions to be executed by the device management apparatus according to the embodiment have a module structure including the units (the communication unit, the registration unit, the function specifying unit, the device specifying unit, and the screen generating unit) described above. From the viewpoint of actual hardware, the CPU (processor) 51 reads out the program instructions from the storage medium and executes the program instructions to load the units on a main memory device, thereby generating the units on the main memory device.

Although the invention has been described with respect to the embodiment, various modifications and improvements in the embodiment may be made.

As a modification of the embodiment, one or more units of the units of the device management apparatus 10 may be included in other apparatus of the device management system 1. There can be employed a configuration, in which, for example, the processing unit 100 is included in the client PC 20 rather than in the device management apparatus 10, and the storage unit 110 is included in the device management apparatus 10.

As another modification, there can be employed a configuration, in which the units of the device management apparatus 10 are implemented as being distributed to a plurality of computers.

According to an aspect of the embodiment, it is possible to manage detailed permissions to operate devices while allowing each of users to find out what permission is grated to the user easily.

Although the invention has been described with respect to specific embodiments for a complete and clear disclosure, amendments, modifications and alternative constructions may be made.

The invention is defined by the following claims.

## Claims

1. A device management apparatus (10) comprising:
a storage unit (110) configured to store device information in which a target device (21, 22) for management is associated with a group and function information in which a piece of identification information for a user is associated with a function of the device (21, 22) to which operation permission is applied for the user and with the group;
an acquisition unit (101) configured to acquire a screen request for acquiring a screen related to the device (21, 22) from the user;
a specifying unit (103, 104) configured to specify the function to which the operation permission is applied for the user and the device (21, 22) having the function and belonging to the group by referring to the device information and the function information, in response to the screen request;
a screen generating unit (105) configured to generate screen information related to the function and the device (21, 22) specified by the specifying unit (103, 104), wherein the screen generating unit (105) generates a management screen; and
a communication unit (101) configured to output the screen information generated by the screen generating unit (105) to a display device;
**characterized in that**:
the management screen includes a function display region (200) and a device display region (210) as operation accepting area for accepting selecting operations from the user;
wherein on the management screen a function can be selected, which is to be performed by a selected device.

2. The device management apparatus (10) according to claim 1, wherein
the group is in a hierarchical multilevel structure made up of a plurality of groups, and
the specifying unit (103, 104) is configured to specify the device (21, 22) belonging to the group specified for the user and another device (21, 22) belonging to a subordinate group by referring to the device information and the function information.

3. The device management apparatus (10) according to claim 1 or 2, wherein
the acquisition unit (101) is configured to acquire a designation request designating a group included in the device information from the user, and
the device management apparatus (10) further comprises a registration unit (102) configured to register information about the user involved in the designation request and the group designated by the designation request in association with each other to the function information.

4. A device management system (1) comprising:
a device management apparatus (10) according to any one of claims 1 to 3.

5. The device management system (1) according to claim 4, further comprising:
a terminal (20) used by a user;
a plurality of multifunction peripherals (21); and
a plurality of laser printers (22).

6. A method comprising the following steps:
storing, in a storage unit (110), device information in which a target device (21, 22) for management is associated with a group and function information in which a piece of identification information for a user is associated with a function of the device (21, 22) to which operation permission is applied for the user and with the group;
acquiring a screen request for acquiring a screen related to the device (21, 22) from the user;
specifying the function to which the operation permission is applied for the user and the device (21, 22) having the function and belonging to the group by referring to the device information and the function information, in response to the screen request;
generating screen information related to the function and the device (21, 22) specified at the specifying, wherein a management screen is generated; and
outputting the generated screen information to a display device,
**characterized by**:
outputting the management screen including a function display region (200) and a device display region (210) as operation accepting area for accepting selecting operations from the user,
wherein on the management screen a function can be selected, which is to be performed by a selected device.

7. A computer-readable storage medium with an executable program stored thereon, wherein the program instructs a computer to perform all of the steps of the method according to claim 6.

## Patentansprüche

1. Vorrichtungsmanagementvorrichtung (10), die umfasst:
eine Speichereinheit (110), die konfiguriert ist, Vorrichtungsinformationen, in denen eine Zielvorrichtung (21, 22) für das Management einer Gruppe zugeordnet ist, und Funktionsinformationen, in denen ein Teil von Identifikationsinformationen für einen Anwender einer Funktion der Vorrichtung (21, 22), auf die eine Bedienungsgenehmigung für den Anwender angewendet wird, und der Gruppe zugeordnet ist, zu speichern;
eine Erfassungseinheit (101), die konfiguriert ist, eine Bildschirmanforderung zum Erfassen eines Bildschirms bezüglich der Vorrichtung (21, 22) von dem Anwender zu erfassen;
eine Spezifizierungseinheit (103, 104), die konfiguriert ist, die Funktion, auf die die Bedienungsgenehmigung für den Anwender angewendet wird, und die Vorrichtung (21, 22), die die Funktion besitzt und zu der Gruppe gehört, durch Bezugnahme auf die Vorrichtungsinformationen und die Funktionsinformationen als Reaktion auf die Bildschirmanforderung zu spezifizieren;
eine Bildschirmerzeugungseinheit (105), die konfiguriert ist, Bildschirminformationen bezüglich der Funktion und der Vorrichtung (21, 22), die durch die Spezifizierungseinheit (103, 104) spezifiziert wurden, zu erzeugen,
wobei die Bildschirmerzeugungseinheit (105) einen Managementbildschirm erzeugt; und
eine Kommunikationseinheit (101), die konfiguriert ist, die durch die Bildschirmerzeugungseinheit (105) erzeugten Bildschirminformationen an eine Anzeigevorrichtung auszugeben;
**dadurch gekennzeichnet, dass**:
der Managementbildschirm einen Funktionsanzeigebereich (200) und einen Vorrichtungsanzeigebereich (210) als einen Bedienungsannahmebereich zum Annehmen von Auswahlbedienungen von dem Anwender enthält;
wobei auf dem Managementbildschirm eine Funktion ausgewählt werden kann, die durch eine ausgewählte Vorrichtung auszuführen ist.

2. Vorrichtungsmanagementvorrichtung (10) nach Anspruch 1, wobei
die Gruppe in einer hierarchischen Mehrebenenstruktur angeordnet ist, die aus mehreren Gruppen besteht, und
die Spezifizierungseinheit (103, 104) konfiguriert ist, die Vorrichtung (21, 22), die zu der Gruppe gehört, die für den Anwender spezifiziert ist, und eine andere Vorrichtung (21, 22), die zu einer untergeordneten Gruppe gehört, durch Bezugnahme auf die Vorrichtungsinformationen und die Funktionsinformationen zu spezifizieren.

3. Vorrichtungsmanagementvorrichtung (10) nach Anspruch 1 oder 2, wobei
die Erfassungseinheit (101) konfiguriert ist, eine Auszeichnungsanforderung, die eine Gruppe auszeichnet, die in den Vorrichtungsinformationen enthalten ist, von dem Anwender zu erhalten, und
die Vorrichtungsmanagementvorrichtung (10) ferner eine Registrierungseinheit (102) umfasst, die konfiguriert ist, Informationen über den Anwender, der an der Auszeichnungsanforderung beteiligt ist, und die Gruppe, die durch die Auszeichnungsanforderung ausgezeichnet ist, in gegenseitiger Zuordnung in den Funktionsinformationen zu registrieren.

4. Vorrichtungsmanagementsystem (1), das umfasst:
eine Vorrichtungsmanagementvorrichtung (10) nach einem der Ansprüche 1 bis 3.

5. Vorrichtungsmanagementsystem (1) nach Anspruch 4, das ferner umfasst:
ein Endgerät (20), das durch einen Anwender verwendet wird;
mehrere Multifunktionsperipheriegeräte (21); und
mehrere Laserdrucker (22).

6. Verfahren, das die folgenden Schritte umfasst:
Speichern in einer Speichereinheit (110) von Vorrichtungsinformationen, in denen eine Zielvorrichtung (21, 22) für das Management einer Gruppe zugeordnet ist, und von Funktionsinformationen, in denen ein Teil der Identifikationsinformationen für einen Anwender einer Funktion der Vorrichtung (21, 22), auf die eine Bedienungsgenehmigung für den Anwender angewendet wird, und der Gruppe zugeordnet ist;
Erfassen einer Bildschirmanforderung zum Erfassen eines Bildschirms bezüglich der Vorrichtung (21, 22) von dem Anwender;
Spezifizieren der Funktion, auf die die Bedienungsgenehmigung für den Anwender angewendet wird, und der Vorrichtung (21, 22), die die Funktion besitzt und zu der Gruppe gehört, durch Bezugnahme auf die Vorrichtungsinformationen und die Funktionsinformationen als Reaktion auf die Bildschirmanforderung;
Erzeugen von Bildschirminformationen bezüglich der Funktion und der Vorrichtung (21, 22), die beim Spezifizieren spezifiziert wurden, wobei ein Managementbildschirm erzeugt wird; und
Ausgeben der erzeugten Bildschirminformationen an eine Anzeigevorrichtung;
**gekennzeichnet durch**:
Ausgeben des Managementbildschirms, der einen Funktionsanzeigebereich (200) und einen Vorrichtungsanzeigebereich (210) als Bedienungsannahmebereich zum Annehmen von Auswahlbedienungen von dem Anwender enthält;
wobei auf dem Managementbildschirm eine Funktion ausgewählt werden kann, die durch eine ausgewählte Vorrichtung auszuführen ist.

7. Computerlesbares Speichermedium mit einem auf ihm gespeicherten ausführbaren Programm, wobei das Programm einen Computer anweist, alle Schritte des Verfahrens nach Anspruch 6 auszuführen.

## Revendications

1. Appareil de gestion de dispositif (10) comprenant :
une unité de stockage (110) conçue pour stocker des informations de dispositif dans lesquelles un dispositif cible (21, 22) pour la gestion est associé à des informations de groupe et de fonction dans lesquelles une information d'identification pour un utilisateur est associée à une fonction du dispositif (21, 22) auquel une autorisation d'opération est appliquée pour l'utilisateur et avec le groupe ;
une unité d'acquisition (101) conçue pour acquérir une demande d'écran destinée à acquérir un écran lié au dispositif (21, 22) provenant de l'utilisateur ;
une unité de spécification (103, 104) conçue pour spécifier la fonction à laquelle l'autorisation d'opération est appliquée pour l'utilisateur et le dispositif (21, 22) comportant la fonction et appartenant au groupe par référence aux informations de dispositif et aux informations de fonction, en réponse à la demande d'écran ;
une unité de génération d'écran (105) conçue pour générer des informations d'écran liées à la fonction et au dispositif (21, 22) spécifiées par l'unité de spécification (103, 104), l'unité de génération d'écran (105) générant un écran de gestion ; et
une unité de communication (101) conçue pour émettre les informations d'écran générées par l'unité de génération d'écran (105) vers un dispositif d'affichage ;
**caractérisé en ce que** :
l'écran de gestion comprend une région d'affichage de fonction (200) et une région d'affichage de dispositif (210) comme zone d'acceptation d'opération destinée à accepter des opérations de sélection provenant de l'utilisateur ;
une fonction pouvant être sélectionnée sur l'écran de gestion, qui doit être effectuée par un dispositif sélectionné.

2. Appareil de gestion de dispositif (10) selon la revendication 1, dans lequel
le groupe est dans une structure hiérarchique multi-niveau constituée d'une pluralité de groupes, et
l'unité de spécification (103, 104) est conçue pour spécifier le dispositif (21, 22) appartenant au groupe spécifié pour l'utilisateur et un autre dispositif (21, 22) appartenant à un groupe subordonné par référence aux informations de dispositif et aux informations de fonction.

3. Appareil de gestion de dispositif (10) selon la revendication 1 ou 2, dans lequel
l'unité d'acquisition (101) est conçue pour acquérir une demande de désignation désignant un groupe compris dans les informations de dispositif provenant de l'utilisateur, et
l'appareil de gestion de dispositif (10) comprend en outre une unité d'enregistrement (102) conçue pour enregistrer des informations sur l'utilisateur impliqué dans la demande de désignation et le groupe désigné par la demande de désignation en association l'un avec l'autre dans les informations de fonction.

4. Système de gestion de dispositif (1) comprenant :
un appareil de gestion de dispositif (10) selon l'une quelconque des revendications 1 à 3.

5. Système de gestion de dispositif (1) selon la revendication 4, comprenant en outre :
un terminal (20) utilisé par un utilisateur ;
une pluralité de périphériques multifonction (21) ; et
une pluralité d'imprimantes laser (22).

6. Procédé comprenant les étapes suivantes :
le stockage, dans une unité de stockage (110), d'informations de dispositif dans lesquelles un dispositif cible (21, 22) pour la gestion est associé à des informations de groupe et de fonction dans lesquelles une information d'identification pour un utilisateur est associée à une fonction du dispositif (21, 22) auquel une autorisation d'opération est appliquée pour l'utilisateur et avec le groupe ;
l'acquisition d'une demande d'écran destinée à acquérir un écran lié au dispositif (21, 22) provenant de l'utilisateur ;
la spécification de la fonction à laquelle l'autorisation d'opération est appliquée pour l'utilisateur et le dispositif (21, 22) comportant la fonction et appartenant au groupe par référence aux informations de dispositif et aux informations de fonction, en réponse à la demande d'écran ;
la génération d'informations d'écran liées à la fonction et au dispositif (21, 22) spécifiés lors de la spécification, un écran de gestion étant généré ; et
l'émission des informations d'écran générées vers un dispositif d'affichage,
**caractérisé par** :
l'émission de l'écran de gestion comprenant une région d'affichage de fonction (200) et une région d'affichage de dispositif (210) comme zone d'acceptation d'opération destinée à accepter des opérations de sélection de l'utilisateur,
une fonction pouvant être sélectionnée sur l'écran de gestion, qui doit être effectuée par un dispositif sélectionné.

7. Support de stockage lisible par ordinateur avec un programme exécutable stocké sur celui-ci, le programme donnant l'instruction à l'ordinateur d'effectuer toutes les étapes du procédé selon la revendication 6.
